# EUROPEAN PATENT APPLICATION

(11) **EP 1 326 359 A1**
(43) Date of publication of application: **09.07.2003**
(21) Application number: 02360012.5
(22) Date of filing: 08.01.2002
(51) Int. Cl.: H04L 1/00

(54) **Adaptive bit rate vocoder for IP telecommunications**

(71) Applicant: ALCATEL, 75008 Paris (FR)
(72) Inventor: Pinier, Francois, 67100 Strasbourg (DE); Gass, Raymond, 67150 Bolsenheim (DE)
(74) Representative: Rausch, Gabriele, Dr.

(57) **Abstract**

An adaptive multi-rate vocoder is used for the improvement of a telecommunications between two user equipment while at least one of them is an internet protocol based user equipment. The transmission quality will not only be analyzed when a telecommunications is set up but also during its running. According to that analyze and to the transmission quality required, an encoding level will be chosen. The analyze will be based mostly on the measure of the different latency to which will be subject the digital signals of that telecommunications when being transmitted in packets through at least one IP based network.

## Description

The present invention relates to the improvement of telecommunications over Internet Protocol IP. More specifically, the invention provides a method of adapting the encoding level of a telecommunications as set forth in the preamble of claim 1. Furthermore, it provides a user equipment and a second user equipment for performing telecommunications as set forth in the preamble of respectively the claims 6 and 7. It provides also a base transceiver station of a mobile radio station as set forth in the preambles of the claims 8 and 9.

Telecommunications services using Internet Protocol IP called now IP telephony is forecast a great future due among other to the already encountered spread of internet based services. The IP telephony is based on the use of a voice encoder usually called vocoder. Such device synthesizes speech using a speech analyzer to convert the analog waveforms into narrowband digital signals. Latter are then transmitted in packets (packet mode) through a network using internet protocol like e.g. a local area network LAN. Similar vocoders are already used in digital cellular phones like the wireless terminals in GSM (global system for mobile communications) or in UMTS (universal mobile telecommunications system). But there, the digitized speech signals are still transmitted in circuit mode instead of in packet mode, therefore, not being subjected to the problems encountered in the transmission of packets particularly over networks using IP as set forth below.

Today, IP telephony is based on the use of a vocoder working at fixed bit rates usually defined in some recommendation e.g. ITU-T G.711 (48kbps to 64kbps) or G.723.1 with a low bit rate 5.3 to 6.3 kbps output quality, or even G.729 at 8kbps using conjugate structure-algebraic code excited linear predictive methods (kpbs stands for kilo bit per second). When multiple coding algorithms have been embedded inside the user equipment like the IP phone or inside an IP gateway letting available for the respective vocoder, a codec (coder-decoder) negotiation phase is started during an earlier phase of the building up of a telecommunications as defined e.g. in ITU-T H.323 recommendation. Capability exchanges are running between both ending points i.e. between the two equipment usually being the user equipment between which the telecommunications shall take place. The final choice of the algorithm to be used as encoding level is taken according to the common vocoder found in the capability lists at the respective end points. Then, the entire telecommunications will be performed to this encoding level i.e. to the once chosen vocoder version.

A different encoding level is directly related to a different bit rate. And, latter implies a different bandwidth occupancy. Therefore, the higher the bit rate is chosen, the better shall be the encoding level i.e. the quality of the telecommunications but the bigger will be the occupied bandwidth. The above cited fixed bit rate of the vocoder (e.g. G.711) are able to provide a good and fair audio quality on perfect transmission conditions. But, these fixed bit rates may provide poor or bad audio quality when some impairments occur on an IP network implying e.g. some packet losses due to some congestion trouble with some encountered router possibly ending with a delayed reception of the corresponding packet. Particularly, all the packets corresponding to the digital signals of a single telecommunications will most probably not be all transmitted over the same path of a network (same routers, gateways) and/or under exactly the same conditions i.e. under the same load of that network. There is no guarantee that during the running of a telecommunications, at least a part of the network through which some of the packets of that telecommunications will be transmitted, are crossed by a very high number of packets coming from other origins. And therefore, a network may provide various latency i.e. different waiting times for different packets even from the same telecommunications. Subsequently, this latency will introduce some jitter (delays). One of such jitter called data dependent jitter is directly caused by limited bandwidth characteristics. In general, a deterioration of the transmission quality through an IP network are not necessarily noticed by the users or of limited consequences within other IP services e.g. when surfing on the Web (world wide web). But it will have dramatic effects during a telecommunications which is per se dependent on an interactive transmission by causing audible pops and clicks if not worse

Obviously, the best solution to overcome typical IP network impairments is to provide enough bandwidth with a safety margin to avoid to strong delay in the transmission of the packets through an IP network. Furthermore, if nevertheless some packets are definitely lost, then the used vocoders will apply some embedded interpolation mechanisms. Latter are able to mask the loss of audio signal by playing an estimated audio signal based on some history of that signal.

The available interpolation mechanism cannot cope with a huge packet losses and should be considered more as a spare technique for occasional packet loss typically for a packet loss rate lower than 3%. But in real situation, such packet loss may increase to much higher values making a satisfying telecommunications over IP almost hopefulness. On contrary, if a big enough bandwidth was chosen such to enable a good telecommunications in the worse case, then much to much bandwidth will be consumed when not that much impairments are present. This implies a too high and very costly limitation of the available bandwidth for other IP services like other IP telecommunications transmitted in parallel over the same connection.

It is an object of the present invention to improve the quality of telecommunications over IP and to optimize the correspondingly used bandwidth for such telecommunications.

This object is attained by a method of adapting the encoding level of a telecommunications according to the claim 1. Furthermore, it is attained by an user equipment and a second user equipment for performing telecommunications according respectively to the claims 6 and 7. And, it is also attained by a base transceiver station of a mobile radio station according to the claims 8 and 9.

It is taken advantage of the already existing adaptive multi-rate AMR vocoder as developed for digital cellular telecommunications system in late version of GSM and coming UMTS and as recommended by the 3GPP (third generation partnership project; www.3gpp.org). In the European patent 0755615 is described a method of adapting the air interface in a cellular mobile radio system and corresponding base transceiver station using an AMR vocoder. It shall permit to minimize the occupancy of transmission channels by reducing the quantity of resource allocated to a call on average and by limiting interference induced by a call in neighboring cells. The selection of the encoding level in the used vocoder either on the base transceiver station or on the mobile radio station (wireless phone) of that cellular mobile radio system will be performed after analyzing the transmission quality between both. This is expressed for such typical radio transmission by a measure of the signal to interference ratio which may change quite abruptly during a running telecommunications e.g. when the mobile radio station moves from one cell to the other. Some information representative of that ratio is then compared with at least one predetermined threshold while a same number of threshold is defined as the number of different encoding level was provided. Differently then in the GSM standard where a transmission mode (encoding level) is chosen at the time the call is set up and retained throughout the call, in the patent the encoding level may then be modified or not according to the result of that comparison together with other conditions like the required level of quality for this telecommunications in progress.

In the present invention, such kind of vocoder or other using e.g. AMR wideband speech codec as described in some documentation from the 3GPP e.g. in TS 26.171 will be adapted for the optimization of the encoding of the digital signals of a telecommunications through an IP network. In this context, the vocoder will be provided with several encoding levels e.g. for AMR wideband from 1.75kbps to 23.85kbps while the used encoding level could be changed according to the measured quality of the transmission of the encoded telecommunications. The quality of transmission is here clearly related to the impairments occurring on such networks. These are usually the different latency i.e. delays to which are subjected the digital signals when being transmitted in packets through the networks.

In such a way, it is possible to optimize the use of the bandwidth for a telecommunications not only at the beginning but also during its running after a modification of transmission quality could be measured. For example, when an overload capacity suddenly occurs on a network through which the packets are transmitted, these packets will be subjected to a stronger delay. In that case, it is worth to decrease the occupied bandwidth by decreasing the used encoding bit rate. The quality of the telecommunications may decrease but will in that way still be guaranteed. If, in a later stage, some capacity load is freed then an higher bit rate may be chosen as encoding level. The present invention allows to optimize the bandwidth needed for a telecommunications through an IP network according to the available capacity and the desired quality of a telecommunications.

In an embodiment of the present invention, an user equipment like an IP phone including optionally IP video comprises an encoder. Latter will be used for a telecommunications via exchange of digital signals between said user equipment and a second user equipment. At least two different encoding levels, e.g. for AMR wideband 10 different ones will be provided to that encoder. And the chosen encoding level will be taken according to the transmission quality towards said second user equipment.

In another embodiment of the present invention, a second user equipment for performing telecommunications via exchange of digital signals with a first user equipment like an IP phone comprises an analyzer of transmission quality of the received digital signals. Latter analyzer is used to measure the possible delay like jitter to which said digital signals may be subjected to when being transmitted in packets at least partly through an IP network. The second user equipment will then transmit the result to the first user equipment allowing it to adapt respectively the encoding level of the transmitted telecommunications.

Alternatively, it is the base transceiver station of a mobile radio station being a second user equipment which comprises an analyzer of transmission quality of the digital signals received from a first user equipment. Latter analyzer is used to measure the possible delay like jitter to which said digital signals may be subjected to when being transmitted in packets at least partly through an IP network. It is then the base transceiver station which will transmit the result of said measure to the first user equipment allowing latter to adapt respectively the encoding level of the transmitted telecommunications.

In a further embodiment, the base transceiver station comprises an encoder for a telecommunications between a second user equipment being a mobile radio station connected to the base transceiver station and a first user equipment like an IP phone. The encoder is provided with at least two different encoding levels, each level corresponding to a given bit rate. The choice of the encoding level is taken according to the transmission quality towards the first user equipment. For that, the possible delay is measured like jitter to which said digital signal may be subjected to when being transmitted in packets at least partly through an IP network.

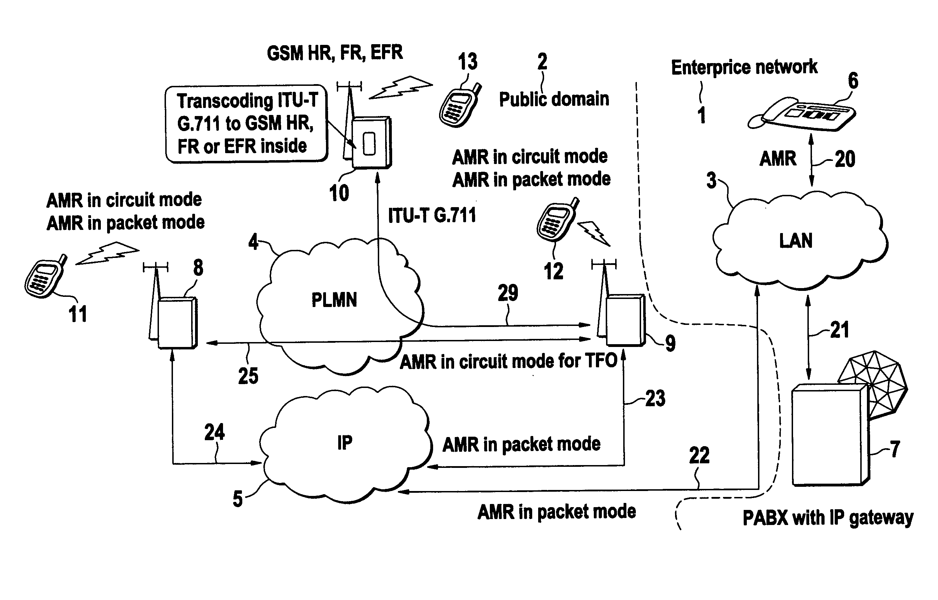

Further advantageous features of the invention are defined in the dependent claims and will become apparent from the following description and the drawing.

One embodiment of the invention will now be explained in more details with reference to the accompanying drawing, in which:
Fig. is a schematic view of an interconnection between two networks.

On the sole figure is shown an interconnection between a private network 1 like the one of a firm and an example of a public domain 2. In this case, the private network 1 comprises a local area network LAN 3 to which are connected 20 different user equipment like an IP phone 6. Also a private branch exchange PBX with an IP gateway 7 may be connected 21 to that LAN 3. Such PBX 7 will be used to manage internal calls between the different IP phones or more generally between all the terminals connected to the LAN 3 and/or connected directly to that PBX.

The public domain 2 is here represented by a public land mobile network PLMN 4 and an IP based network 5. To the PLMN 4 are connected 25, 29 different base transceiver stations 8, 9, 10 of a cellular mobile system. Each of these base transceiver stations 8-10 can send via radio digital signals according to GSM or UMTS towards a user equipment being a mobile radio station (wireless terminal) respectively 11, 12, and 13 if the corresponding user equipment is in the area covered by the cell of that base transceiver stations 8-10. This public domain 2 is directly connected to the private network via a connection 22 between the IP based network 5 and the LAN 3. Said IP based network 5 is further connected 23, 24 to two 8, 9 of the base transceiver stations 8-10.

A telecommunications to be build according to the present invention between a first user equipment being e.g. the IP phone 6 and a second user equipment e.g. being a mobile radio station 8-10 will have to verify the following steps. The first user equipment is provided with at least two different encoding levels for the digital signals of the telecommunications between the two user equipment. At the time of a call between the two user equipment, a measure (analyze) of the transmission quality for at least one transmission direction is performed. If the analyze is performed on the second user equipment side i.e. for a transmission direction from the first to the second user equipment, than the result of that analyze must be transmitted to the first user equipment. According to that result, a corresponding encoding level on the first equipment side will be chosen. The same applies if an analyze of the transmission quality for the other direction is performed.

The analyze of the quality of the transmission is based on the measure of the different latencies (delays) to which will be subjected the digital signals when being transmitted in packets in the present example through the LAN 3 and the IP network 5. In particularly, the jitter introduced by the different routers or gateways will be measured. Accordingly, an encoding level will be chosen for the analyzed transmission direction. A higher bit rate encoding level will usually being selected when the transmission quality will improve. In contrary, a lower bit rate encoding level will be selected when the transmission quality will impair. Said analyze of the transmission quality is performed during the running of the telecommunications e.g. at regular time interval. And a change of the respective encoding level will be made following some specific rules. Latter may be defined such to avoid an incessant change of encoding level particularly when the transmission quality is near some threshold.

To perform an analyze of the transmission quality from the second user equipment side i.e. for the transmission direction coming from the first user equipment, two possibilities may be encountered. Or the required analyzer is directly in the second user equipment e.g. a wireless terminal 11, 12 as defined under UMTS, or it is in the base transceiver station 10. Only in the first case it will be possible to perform a telecommunications under tandem free operation TFO (without any change of the protocol for the digital signals) using exclusively the packet mode of the wireless terminal 11, 12 and the paths 20, 22, 23, 24. In the second case, the base transceiver station 10 will receive the digital signals from the first user equipment from the PLMN 4 via e.g. a connection 29 to another base transceiver station 9 which is directly connected 23 to the IP network 5. The former base transceiver station 10 will have to translate the digital signals e.g. in G.711 into e.g. a GSM standard like half rate, full rate of enhanced full rate to transfer it via radio to the wireless terminal 13.

This transceiver station 10 may supplementary be provided with at least two encoding levels for the digital signals transmitted in the opposite direction towards the first user equipment here being an IP phone 6. In that case, it is on the base transceiver station 10 that the encoding of the digital signals of the telecommunications will take place according to the quality of the transmission towards the first user equipment. Alternately, that encoding can take place directly on the wireless terminals 11, 12 in the cells of base transceiver station respectively 8, 9 if there are provided with the required encoding level. In that case, a telecommunications under TFO will be possible with the IP phone 6. In prior art, a telecommunications under TFO was only possible between the two wireless terminal 11, 12 using the path 25 and in circuit mode as well as in packet mode.

With the present invention, it is also possible to adapt the bandwidth via the encoding level of a telecommunications between a first user equipment being said IP phone 6 and a second user equipment also being another IP phone. Latter IP phone may be directly connected to the LAN 3. In that case, the encoding level will be adapted in dependency of a change of e.g. latency coming from that LAN 3. But the second user equipment could also be an IP phone connected directly to some other LAN external to the firm network 1 while latter LAN is connected to the IP network 5. Then, the delay measured to adapt the encoding level will be a sum of all the latencies introduced by both LAN i.e. the one 3 from the firm network 1 and the other one together with the latency coming from the IP network 5.

In the context of the present invention, the encoding level chosen for a transmission direction is usually independent of the one chosen in the reverse direction. Indeed, the packets corresponding to digital signals of a telecommunications from a first user equipment to a second user equipment will not necessarily follow the same path and being subjected to same latency as the ones corresponding to the digital signals of that telecommunications in the reverse direction. Furthermore, a change of encoding level due to some improvement or impairment encountered over the transmission shall not be taken in parallel for both transmission directions. It is not absolutely the case that such improvement or impairment of the transmission will apply at the same time in a same level for both transmission directions.

The possibility to benefit of the advantage from the use of an encoder like the AMR-wideband for a telecommunications via an IP network while an encoding level can be changed during the running of a telecommunications (on the fly) will improve substantially the use of bandwidth. This will enable to optimize the use of the total available bandwidth lowering the cost of a connection through a public domain 2 like shown on the figure.

## Claims

1. A method of adapting the encoding level of a telecommunications between at least two user equipment via exchange of digital signals, said method comprising the steps of:
providing at least one user equipment with at least two encoding levels for said digital signals, each level corresponding to a given bit rate;
at the time of a call between the two user equipment, performing an analyze of transmission quality for at least one transmission direction;
selecting one of said encoding levels for said transmission direction
in accordance with its transmission quality; and
**characterized by, that** said user equipment provided with two encoding levels being an internet protocol based equipment and said analyze of transmission quality being based among other on possible delays to which said digital signals may being subjected to.

2. A method according to claim 1, **characterized by**, that a higher bit rate encoding level being selected when transmission quality being improved, or a lower bit rate encoding level being selected when transmission quality being impaired.

3. A method according to claim 1, **characterized by**, that said analyze of transmission quality being performed regularly during a telecommunications, selecting accordingly one of said encoding level at least following some predefined rules.

4. A method according to claim 3, **characterized by**, that said rules being defined such to enable to avoid an incessant change of encoding level.

5. A method according to claim 1, **characterized by**, that said delay includes among other typical jitter to which said digital signals may being subjected when being transmitted in packets through a network using internet protocol.

6. An user equipment for performing telecommunications via exchange of digital signals with a second user equipment, said first user equipment comprising an encoder for said digital signals equipped with at least two different encoding levels, each level corresponding to a given bit rate **characterized in, that** said first user equipment being an internet protocol based equipment and the chosen encoding level being taken according to the transmission quality towards said second user equipment based among other on possible delays to which said digital signals may being subjected to.

7. A second user equipment for performing telecommunications via exchange of digital signals with a first user equipment **characterized in, that** said second user equipment comprises an analyzer of transmission quality of the received digital signals while said analyzer being able to measure some possible delay to which said digital signals may be subjected to when being transmitted in packets through a network using internet protocol and said second user equipment being able to transmit the result of said measure to said first user equipment.

8. Base transceiver station of a mobile radio station being a second user equipment for performing telecommunications via exchange of digital signals with a first user equipment **characterized in, that** said base station comprises an analyzer of transmission quality of the digital signals received from said first user equipment while said analyzer being able to measure some possible delay to which said digital signals may be subjected to when being transmitted in packets through a network using internet protocol and said base transceiver station being able to transmit the result of said measure to said first user equipment.

9. Base transceiver station of a mobile radio station being a second user equipment for performing telecommunications via exchange of digital signals with a first user equipment, said base transceiver station comprising an encoder for said digital signals provided with at least two different encoding levels, each level corresponding to a given bit rate **characterized in, that** the chosen encoding level being taken according to the transmission quality towards said first user equipment based among other on possible delays to which said digital signals may being subjected to when being transmitted in packets through a network using internet protocol.
